# EUROPEAN PATENT APPLICATION

(11) **EP 4 664 307 A1**
(43) Date of publication of application: **17.12.2025**
(21) Application number: 25156756.6
(22) Date of filing: 10.02.2025
(51) Int. Cl.: G06F 16/16, H04N 1/00

(54) **INFORMATION PROCESSING SYSTEM AND PROGRAM**

(30) Priority: 11.06.2024 JP 2024094245
(71) Applicant: FUJIFILM Business Innovation Corp., Minato-ku Tokyo (JP)
(72) Inventor: ONITSUKA, Miki, Yokohama-shi, Kanagawa (JP)
(74) Representative: Kurig, Thomas

(57) **Abstract**

An information processing system includes a processor configured to: acquire rule information including a rule for giving a file name of a file generated by reading an original by a reading device, the rule defining that the file name includes at least information related to the information processing system; acquire, from the acquired rule information, the information related to the information processing system that is defined to be included in the file name; and give a file name conforming to the acquired rule information to a file generated by reading an original by the reading device, and transmit the file to an external device.

## Description

### Background

### (i) Technical Field

The present disclosure relates to an information processing system and a program.

### (ii) Related Art

Japanese Unexamined Patent Application Publication No. 2019-113987 discloses a file management device capable of giving a file name in accordance with a user's preference.

Japanese Unexamined Patent Application Publication No. 2008-131189 discloses a document management system that enables appropriate and efficient management of document data generated by scanning.

### Summary

Accordingly, it is an object of the present disclosure to provide an information processing system and a program that are capable of giving a file name conforming to a rule defining that the file name includes information related to the information processing system to a file generated by reading an original by a reading device and of transmitting the file to an external device.

According to a first aspect of the present disclosure, there is provided an information processing system including a processor configured to: acquire rule information including a rule for giving a file name of a file generated by reading an original by a reading device, the rule defining that the file name includes at least information related to the information processing system; acquire, from the acquired rule information, the information related to the information processing system that is defined to be included in the file name; and give a file name conforming to the acquired rule information to a file generated by reading an original by the reading device, and transmit the file to an external device.

According to a second aspect of the present disclosure, in the information processing system according to the first aspect, the processor may be configured to: acquire rule information from the external device as a transmission destination specified by a user; and give a file name conforming to the acquired rule information to a file generated by reading an original by the reading device, and transmit the file to the external device.

According to a third aspect of the present disclosure, in the information processing system according to the second aspect, the rule information may be provided as a file.

According to a fourth aspect of the present disclosure, in the information processing system according to the second aspect, the rule information may be provided as a folder name of a storage destination of a file to be transmitted.

According to a fifth aspect of the present disclosure, in the information processing system according to any one of the first to fourth aspects, the rule information may include a template for a file name, and the processor may be configured to: prohibit editing of at least a part of the template when editing the file name of the file generated by reading the original by the reading device.

According to a sixth aspect of the present disclosure, in the information processing system according to any one of the first to fifth aspects, the rule information may include a rule for giving a folder name of a folder to be created in the external device in order to store a file, and the processor may be configured to: create, when transmitting the file to the external device, a folder having a folder name conforming to the acquired rule information in the external device and transmit the file to the folder.

According to a seventh aspect of the present disclosure, in the information processing system according to any one of the first to sixth aspects, the rule information may include processing information for processing the file generated by reading the original by the reading device, and the processor may be configured to: transmit the file processed in accordance with the processing information to the external device.

According to an eighth aspect of the present disclosure, in the information processing system according to the seventh aspect, the processing information may include at least file division processing.

According to a ninth aspect of the present disclosure, in the information processing system according to any one of the first to eighth aspects, the rule information may include a character string candidate for inputting a file name, and the processor may be configured to: display an operator for inputting the character string candidate when editing the file name of the file generated by reading the original by the reading device.

According to a tenth aspect of the present disclosure, in the information processing system according to any one of the first to ninth aspects, the rule information may include a template for a file name including an item for inputting a character string and a character string candidate for inputting a content of the item, and the processor may be configured to: display the character string candidate for inputting the content of the item when the item is selected in the file name being edited in editing the file name of the file generated by reading the original by the reading device.

According to an eleventh aspect of the present disclosure, there is provided a program causing a computer to execute a process including: acquiring rule information including a rule for giving a file name of a file generated by reading an original by a reading device, the rule defining that the file name includes at least information related to a system including the computer; acquiring, from the acquired rule information, the information related to the system that is defined to be included in the file name; and giving a file name conforming to the acquired rule information to a file generated by reading an original by the reading device, and transmitting the file to an external device.

With the information processing system of the first aspect, a file name conforming to a rule defining that the file name includes information related to the information processing system can be given to a file generated by reading an original by the reading device, and the file can be transmitted to the external device.

With the information processing system of the second aspect, the rule information can be acquired from the external device that is the transmission destination.

With the information processing system of the third aspect, the rule information can be provided as a file.

With the information processing system of the fourth aspect, the rule information can be provided as a folder name.

With the information processing system of the fifth aspect, the user can be prevented from editing the file name against the rule.

With the information processing system of the sixth aspect, the file can be stored in the folder having the folder name conforming to the rule.

With the information processing system of the seventh aspect, the file processed in accordance with the rule can be transmitted.

With the information processing system of the eighth aspect, the file generated by reading the original by the reading device can be divided and transmitted.

With the information processing system of the ninth aspect, input of a specific character string candidate can be facilitated.

With the information processing system of the tenth aspect, input of the content of a specific item can be facilitated.

With the program of the eleventh aspect, a file name conforming to a rule defining that the file name includes information related to the system can be given to a file generated by reading an original by the reading device, and the file can be transmitted to the external device.

### Brief Description of the Drawings

Exemplary embodiments of the present disclosure will be described in detail based on the following figures, wherein:
Fig. 1 is a diagram illustrating a system configuration of a file management system according to an exemplary embodiment of the present disclosure;
Fig. 2 is a block diagram illustrating a hardware configuration of an image forming apparatus in the file management system;
Fig. 3 is a diagram illustrating an example of a file name input screen displayed on a touch panel of the image forming apparatus;
Fig. 4 is a diagram illustrating an example of a file name input screen displayed on the touch panel of the image forming apparatus;
Fig. 5 is a diagram illustrating an example of a file name input screen displayed on the touch panel of the image forming apparatus; and
Fig. 6 is a flowchart for explaining a flow of processing at the time of scan auto execution in the image forming apparatus.

### Detailed Description

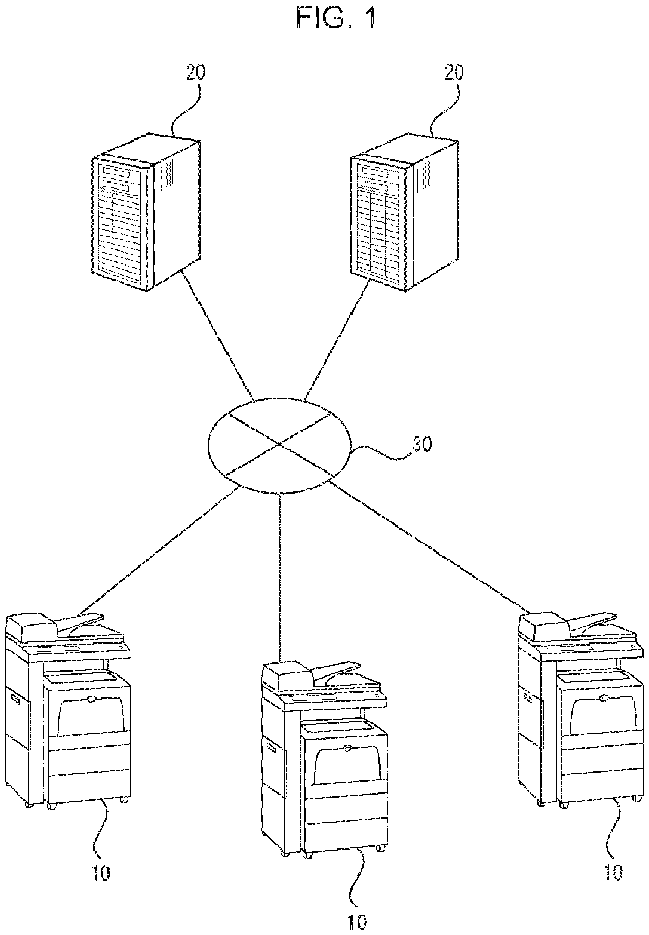

Hereinafter, exemplary embodiments for implementing the technology of the present disclosure will be described in detail with reference to the drawings. Fig. 1 is a diagram illustrating a system configuration of a file management system according to an exemplary embodiment.

As illustrated in Fig. 1, the file management system of the exemplary embodiment includes a plurality of image forming apparatuses 10 and a plurality of management servers 20.

The image forming apparatus 10 is a so-called multifunction peripheral having a plurality of functions such as a copy function, a print function, a facsimile function, and a scan function. The image forming apparatus 10 is connected to the management server 20 via Internet 30. The image forming apparatus 10 is an example of an information processing system in the technology of the present disclosure.

The management server 20 is a server for managing files transmitted from the image forming apparatus 10. The management server 20 is an example of an external device in the technology of the present disclosure.

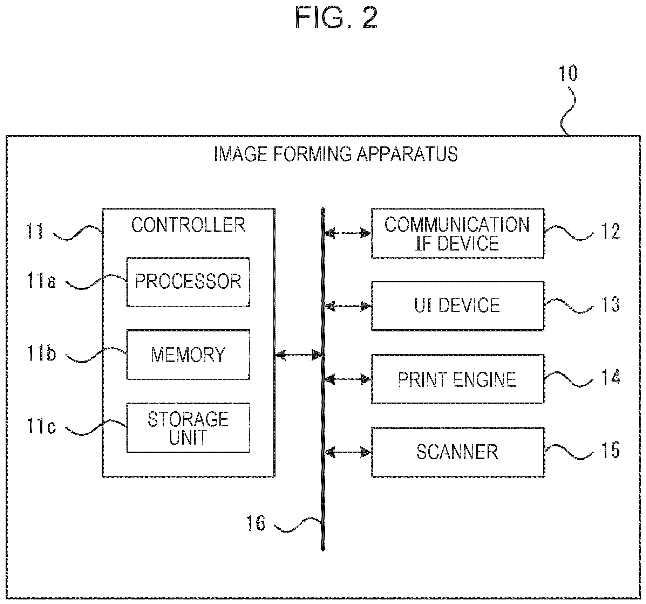

Next, a hardware configuration of the image forming apparatus 10 according to the present exemplary embodiment will be described. Fig. 2 is a block diagram illustrating a hardware configuration of the image forming apparatus 10.

As illustrated in Fig. 2, the image forming apparatus 10 includes a controller 11, a communication interface (abbreviated as IF) device 12, a user interface (abbreviated as UI) device 13 including a touch panel, a physical button, and the like, a print engine 14, and a scanner 15. These components are connected to each other via a control bus 16.

The controller 11 includes a processor 1 1a, a memory 11b, and a storage unit 11c. The processor 11a executes predetermined processing on the basis of a control program read from the storage unit 11c and loaded in the memory 11b. The storage unit 11c includes, for example, a read only memory (ROM), a hard disk drive (HDD), or a solid state drive (SSD). The storage unit 11c stores a control program, necessary software, data, and the like. The storage unit 11c also stores processing information of a print job received from the management server 20.

In the present exemplary embodiment, the description is given in which the processor 11a reads a program stored in the storage unit 11c and executes the program, but the configuration is not limited thereto. The program may be provided in a form of being recorded on a computer readable recording medium. For example, the program may be provided in a form of being recorded on an optical disc such as a compact disc (CD)-ROM or a digital versatile disc (DVD)-ROM, or in a form of being recorded on a semiconductor memory such as a universal serial bus (USB) memory or a memory card. Further, the program may be acquired from an external device via a communication line.

The communication IF device 12 transmits and receives data to and from an external device or the like. The UI device 13 receives an instruction input from a user. The print engine 14 prints an image on a recording medium such as a print sheet through processing including charging, exposure, development, transfer, fixing, and the like. The scanner 15 reads an original placed at the image forming apparatus 10 as image data. The scanner 15 is an example of a reading device in the technology of the present disclosure.

In the above-described file management system, the image forming apparatus 10 has a function called "scan auto". The scan auto is a function of transmitting an optimally set scanned document (that is, a file) by email or the like when a user simply sets an original and presses a start button.

In the file management system, it is possible, for example, to transmit a report of each department of an organization to the specific management server 20 by using the scan auto function of the image forming apparatus 10 installed in the department. This allows the management server 20 to unitarily manage files of the reports transmitted from the respective departments.

Here, it is desired that the files transmitted from the respective departments have file names conforming to a unified rule.

This file name is, for example, "report_<department name>_user name _YYYYMMDD (Christian calendar year, month, day)" or the like. Here, the "department name" is a name of a department in which the image forming apparatus 10 used for transmission is installed. The "user name" is a name of a user logged in to the image forming apparatus 10. That is, the "department name" and the "user name" are information related to the image forming apparatus 10.

As described above, the file name is desired to be a file name conforming to a unified rule, the file name including information related to the image forming apparatus 10.

In order to meet the above-described desire, the controller 11 in the image forming apparatus 10 of the present exemplary embodiment acquires rule information including a rule for giving a file name of a file generated by reading an original by the scanner 15, the rule defining that the file name includes at least information related to the image forming apparatus, acquires, from the acquired rule information, the information related to the image forming apparatus that is defined to be included in the file name, gives a file name conforming to the acquired rule information to a file generated by reading an original by the scanner 15, and transmits the file to the management server 20.

Here, the "information related to the image forming apparatus" is, for example, information related to the main body of the image forming apparatus 10, information related to a user logged in to the image forming apparatus 10, or the like. The information related to the main body of the image forming apparatus 10 is, for example, information of a main body model name, an installation department name, an installation location, or the like. The information related to a user logged in to the image forming apparatus 10 is, for example, information of a user name, a user ID, an organization name, a department name, or the like.

In the image forming apparatus 10 of the present exemplary embodiment, the controller 11 acquires rule information from the management server 20 as a transmission destination specified by a user, gives a file name conforming to the acquired rule information to a file generated by reading an original by the scanner 15, and transmits the file to the management server 20.

Specifically, the controller 11 connects with the management server 20 as a transmission destination to acquire a list of files stored in the management server 20. The list of files also includes information of folders stored in the management server 20. The controller 11 determines and uses the rule information from the acquired list.

Here, the rule information provided by the management server 20 may be provided as a file. The rule information may be, for example, "report_<<department name>>_<user name> _<YYYYMMDD>" or the like. Here, "<...>" indicates a tag, and means that the information of contents defined in <> is described. Further, "<<...>>" means that the information of contents defined in <> is described with <>. Note that the method of defining the rule information is not limited to the above, and any mode may be used.

In a case where the rule information is provided as a file, the rule information may be provided as a file defined by a special extension, with a file name being the rule information. For example, "report_<<sys:department name>>_<user name> _<YYYYMMDD>.NAME" or the like can be used. Since the file name is the rule information in this file, the file may include any contents.

Further, the rule information may be included in the contents of a file and provided as the file with an extension indicating the rule information, such as in "NAME.xml", for example.

Further, the rule information provided by the management server 20 may be provided as a folder name of a storage destination of a file to be transmitted.

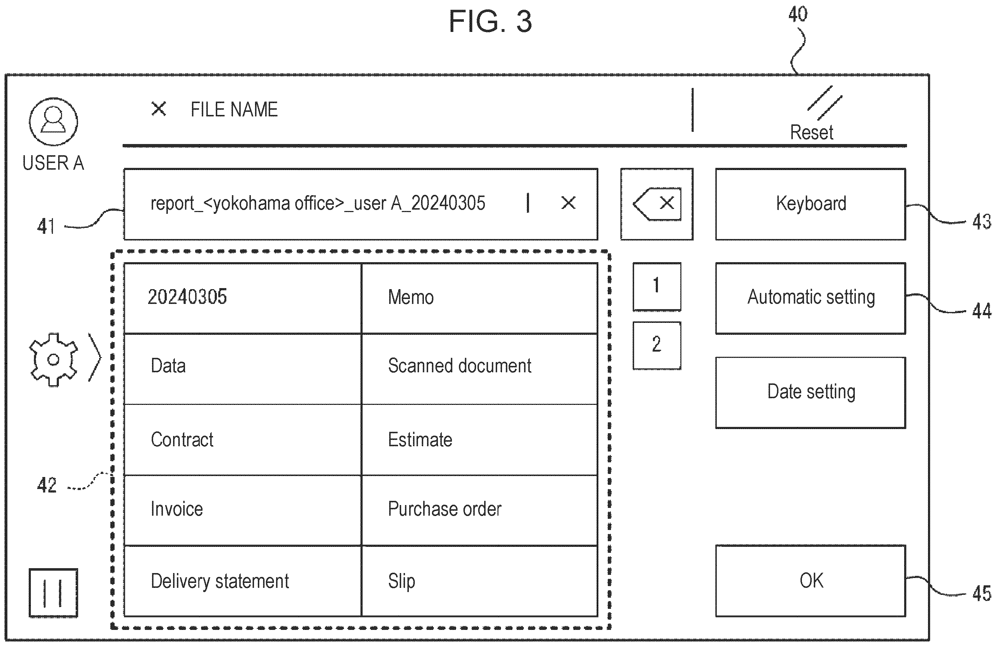

Here, a method of inputting a file name using rule information will be described. Fig. 3 is a diagram illustrating an example of a file name input screen displayed on a touch panel.

As illustrated in Fig. 3, a file name input screen 40 includes a file name display section 41, a character string candidate display section 42, a "keyboard" button 43, an "automatic setting" button 44, and an "OK" button 45.

The file name display section 41 is an area for displaying a currently input file name.

The character string candidate display section 42 is an area for displaying candidates for a character string to be input to a file name. The display section for each candidate is a button, and touching a button allows an input of a character string displayed on the button.

The "keyboard" button 43 is a button for displaying a software keyboard for inputting characters.

The "automatic setting" button 44 is a button for switching the effectiveness and ineffectiveness of the automatic setting of a file name conforming to the rule information. The initial value of the automatic setting is set to be effective. In a case where the automatic setting is set to be effective, the controller 11 displays a file name conforming to the acquired rule information on the file name display section 41 even if a user does not perform any special operation. Here, the controller 11 acquires the information of the contents of tags included in the rule information, and displays a file name reflecting the acquired information.

For example, the rule information is "report_<<<department name>>_<user name> _<YYYYMMDD>". In this case, the controller 11 inputs a department name preliminarily registered in the image forming apparatus 10 as the "department name". Further, the controller 11 inputs the name of a user logged in to the image forming apparatus 10 as the "user name". In addition, the controller 11 inputs, as "YYYYMMDD", a current date with the Christian calendar year in four digits, the month in two digits, and the day in two digits. As a result, the file name display section 41 displays the file name as "report_<yokohama office>_user A_20240305", for example.

On the file name input screen 40, it is also possible to perform editing such as addition or deletion of an arbitrary character string on the file name input by the "automatic setting" button 44.

The "OK" button 45 is a button for confirming the file name of a file to be generated as the file name currently displayed in the file name display section 41.

The rule information may include a template for a file name, and the controller 11 may prohibit editing of at least a part of the template when editing the file name of the file generated by reading the original by the scanner 15.

For example, in a case where a template including a character string such as "report_<<department name>>_<user name>_<YYYYMMDD>" is defined, editing of the character string in the template portion may be prohibited, and only addition of a character string may be allowed, such as in "report_<yokohama office>_user A_20240305_revised edition".

In addition, the rule information may include a rule for giving a folder name of a folder to be created in the management server 20 in order to store a file, and when transmitting a file to the management server 20, the controller 11 may create a folder having a folder name conforming to the acquired rule information in the management server 20 and transmit the file to the folder.

The rule information may include processing information for processing a file generated by reading an original by the scanner 15, and the controller 11 may transmit the file processed in accordance with the processing information to the management server 20.

In this case, the processing information may include at least file division processing.

The rule information may include a character string candidate for inputting a file name, and the controller 11 may display an operator for inputting a character string candidate when editing the file name of a file generated by reading an original by the scanner 15.

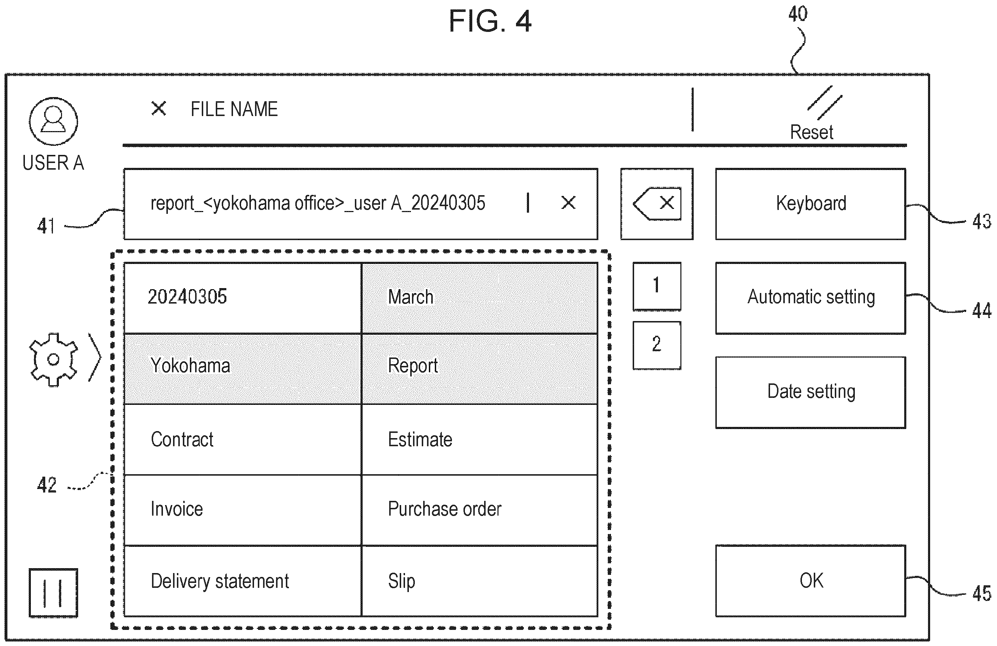

Specifically, as illustrated in Fig. 4, buttons for inputting character string candidates included in the rule information may be displayed on the character string candidate display section 42. Here, the buttons for inputting character string candidates included in the rule information are displayed in gray.

Further, the rule information may include a template for a file name including an item for inputting a character string and a character string candidate for inputting a content of the item, and the controller 11 may display the character string candidate for inputting the content of the item when the item is selected in the file name being edited in editing the file name of a file generated by reading an original by the scanner 15.

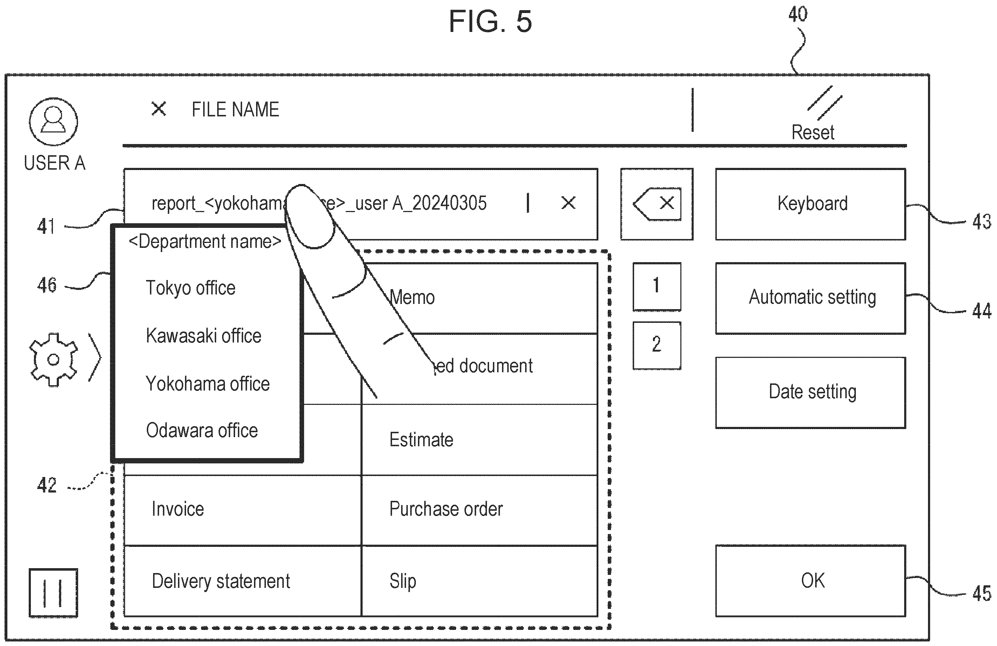

Specifically, as illustrated in Fig. 5, when a specific tag is selected in the file name display section 41, a selection portion 46 of character string candidates for inputting the contents of the tag may be displayed.

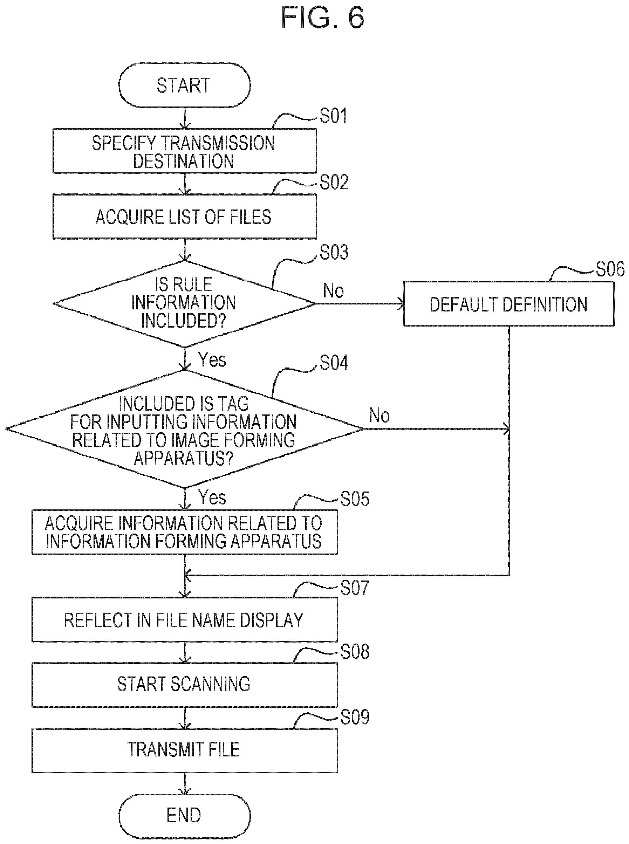

Next, a flow of the processing at the time of scan auto execution in the image forming apparatus 10 will be described with reference to the flowchart of Fig. 6.

First, in step S01, the controller 11 of the image forming apparatus 10 receives specification of a transmission destination from a user.

Next, in step S02, the controller 11 connects to the management server 20 as the transmission destination, and acquires a list of files stored in the management server 20.

Next, in step S03, the controller 11 determines whether or not the acquired list of files includes rule information.

When it is determined in step S03 that the rule information is not included, the controller 11 acquires a default definition of a file name in step S06.

Next, in step S07, the controller 11 displays a file name on the file name display section 41.

When it is determined in step S03 that the rule information is included, the controller 11 determines in step S04 whether or not the rule information includes a tag for inputting information related to the image forming apparatus 10.

When it is determined in step S04 that the tag for inputting the information related to the image forming apparatus 10 is included, the controller 11 acquires the information related to the image forming apparatus 10 in step S05.

Next, in step S07, the controller 11 displays a file name on the file name display section 41 in accordance with the rule information.

When it is determined in step S04 that the tag for inputting the information related to the image forming apparatus 10 is not included, the controller 11 displays a file name on the file name display section 41 in accordance with the rule information in step S07.

Thereafter, once a scan start instruction is input from the user, the controller 11 starts scanning in step S08.

Finally, in step S09, the controller 11 gives the file name to a file generated by scanning, transmits the file to the management server 20, and finishes the processing.

### Modification

Although the file management system according to one exemplary embodiment of the present disclosure has been described above, the technology of the present disclosure is not limited to the above-described exemplary embodiment and can be appropriately changed.

For example, the acquisition of the rule information is not limited to the mode of acquiring the rule information from the management server 20 as the transmission destination specified by a user. The acquisition of the rule information may be a mode in which the rule information is preliminarily recorded in each image forming apparatus 10, for example. Alternatively, the rue information may be acquired from an external device other than the management server 20 as the transmission destination. In addition to the above, any mode may be adopted.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

In addition, in the technology of the present disclosure, the system includes both a system configured by a plurality of devices and a system configured by a single device.

The technique of the present disclosure is also applicable to a program and a program product.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix

(((1))) An information processing system, comprising:
   a processor configured to:
   acquire rule information including a rule for giving a file name of a file generated by reading an original by a reading device, the rule defining that the file name includes at least information related to the information processing system;
   acquire, from the acquired rule information, the information related to the information processing system that is defined to be included in the file name; and
   give a file name conforming to the acquired rule information to a file generated by reading an original by the reading device, and transmit the file to an external device.
(((2))) The information processing system according to (((1))), wherein the processor is configured to:
   acquire rule information from the external device as a transmission destination specified by a user; and
   give a file name conforming to the acquired rule information to a file generated by reading an original by the reading device, and transmit the file to the external device.
(((3))) The information processing system according to (((2))), wherein the rule information is provided as a file.
(((4))) The information processing system according to (((2))), wherein the rule information is provided as a folder name of a storage destination of a file to be transmitted.
(((5))) The information processing system according to any one of (((1))) to (((4))), wherein
   the rule information includes a template for a file name, and
   the processor is configured to:
      prohibit editing of at least a part of the template when editing the file name of the file generated by reading the original by the reading device.
(((6))) The information processing system according to any one of (((1))) to (((5))), wherein
   the rule information includes a rule for giving a folder name of a folder to be created in the external device in order to store a file, and
   the processor is configured to:
      create, when transmitting the file to the external device, a folder having a folder name conforming to the acquired rule information in the external device and transmit the file to the folder.
(((7))) The information processing system according to any one of (((1))) to (((6))), wherein
   the rule information includes processing information for processing the file generated by reading the original by the reading device, and
   the processor is configured to:
      transmit the file processed in accordance with the processing information to the external device.
(((8))) The information processing system according to (((7))), wherein the processing information includes at least file division processing.
(((9))) The information processing system according to any one of (((1))) to (((8))), wherein
   the rule information includes a character string candidate for inputting a file name, and
   the processor is configured to:
      display an operator for inputting the character string candidate when editing the file name of the file generated by reading the original by the reading device.
(((10))) The information processing system according to any one of (((1))) to (((9))), wherein
   the rule information includes a template for a file name including an item for inputting a character string and a character string candidate for inputting a content of the item, and
   the processor is configured to:
      display the character string candidate for inputting the content of the item when the item is selected in the file name being edited in editing the file name of the file generated by reading the original by the reading device.
(((11))) A program causing a computer to execute a process comprising:
   acquiring rule information including a rule for giving a file name of a file generated by reading an original by a reading device, the rule defining that the file name includes at least information related to a system including the computer;
   acquiring, from the acquired rule information, the information related to the system that is defined to be included in the file name; and
   giving a file name conforming to the acquired rule information to a file generated by reading an original by the reading device, and transmitting the file to an external device.

With the information processing system of (((1))), a file name conforming to a rule defining that the file name includes information related to the information processing system can be given to a file generated by reading an original by the reading device, and the file can be transmitted to the external device.

With the information processing system of (((2))), the rule information can be acquired from the external device that is the transmission destination.

With the information processing system of (((3))), the rule information can be provided as a file.

With the information processing system of (((4))), the rule information can be provided as a folder name.

With the information processing system of (((5))), the user can be prevented from editing the file name against the rule.

With the information processing system of (((6))), the file can be stored in the folder having the folder name conforming to the rule.

With the information processing system of (((7))), the file processed in accordance with the rule can be transmitted.

With the information processing system of (((8))), the file generated by reading the original by the reading device can be divided and transmitted.

With the information processing system of (((9))), input of a specific character string candidate can be facilitated.

With the information processing system of (((10))), input of the content of a specific item can be facilitated.

With the program of (((11))), a file name conforming to a rule defining that the file name includes information related to the system can be given to a file generated by reading an original by the reading device, and the file can be transmitted to the external device.

## Claims

1. An information processing system, comprising:
a processor configured to:
acquire rule information including a rule for giving a file name of a file generated by reading an original by a reading device, the rule defining that the file name includes at least information related to the information processing system;
acquire, from the acquired rule information, the information related to the information processing system that is defined to be included in the file name; and
give a file name conforming to the acquired rule information to a file generated by reading an original by the reading device, and transmit the file to an external device.

2. The information processing system according to claim 1, wherein the processor is configured to:
acquire rule information from the external device as a transmission destination specified by a user; and
give a file name conforming to the acquired rule information to a file generated by reading an original by the reading device, and transmit the file to the external device.

3. The information processing system according to claim 2, wherein the rule information is provided as a file.

4. The information processing system according to claim 2, wherein the rule information is provided as a folder name of a storage destination of a file to be transmitted.

5. The information processing system according to any one of claims 1 to 4, wherein
the rule information includes a template for a file name, and
the processor is configured to:
prohibit editing of at least a part of the template when editing the file name of the file generated by reading the original by the reading device.

6. The information processing system according to any one of claims 1 to 5, wherein
the rule information includes a rule for giving a folder name of a folder to be created in the external device in order to store a file, and
the processor is configured to:
create, when transmitting the file to the external device, a folder having a folder name conforming to the acquired rule information in the external device and transmit the file to the folder.

7. The information processing system according to any one of claims 1 to 6, wherein
the rule information includes processing information for processing the file generated by reading the original by the reading device, and
the processor is configured to:
transmit the file processed in accordance with the processing information to the external device.

8. The information processing system according to claim 7, wherein the processing information includes at least file division processing.

9. The information processing system according to any one of claims 1 to 8, wherein
the rule information includes a character string candidate for inputting a file name, and
the processor is configured to:
display an operator for inputting the character string candidate when editing the file name of the file generated by reading the original by the reading device.

10. The information processing system according to any one of claims 1 to 9, wherein
the rule information includes a template for a file name including an item for inputting a character string and a character string candidate for inputting a content of the item, and
the processor is configured to:
display the character string candidate for inputting the content of the item when the item is selected in the file name being edited in editing the file name of the file generated by reading the original by the reading device.

11. A program causing a computer to execute a process comprising:
acquiring rule information including a rule for giving a file name of a file generated by reading an original by a reading device, the rule defining that the file name includes at least information related to a system including the computer;
acquiring, from the acquired rule information, the information related to the system that is defined to be included in the file name; and
giving a file name conforming to the acquired rule information to a file generated by reading an original by the reading device, and transmitting the file to an external device.
